# EUROPÄISCHE PATENTSCHRIFT

(11) **EP 3 344 792 B1**
(45) Veröffentlichungstag und Bekanntmachung des Hinweises auf die Patenterteilung: **02.10.2019**
(21) Anmeldenummer: 16748105.0
(22) Anmeldetag: 01.08.2016
(51) Int. Cl.: C23C 2/00, C23C 2/20

(54) **VORRICHTUNG ZUM BEHANDELN EINES METALLBANDES**
APPARATUS FOR THE TREATMENT OF A METAL STRIP
DISPOSITIF DE TRAITEMENT D'UNE BANDE BANDE MÉTALLIQUE

(30) Priorität: 01.09.2015 DE 102015216721
(43) Veröffentlichungstag der Anmeldung: 11.07.2018
(73) Patentinhaber: Fontaine Engineering und Maschinen GmbH, 40764 Langenfeld (DE)
(72) Erfinder: FONTAINE, Pascal, 40764 Langenfeld (DE); FONTAINE, Dominique, 40764 Langenfeld (DE)
(74) Vertreter: Grosse, Wolf-Dietrich Rüdiger
(86) Internationale Anmeldenummer: PCT/EP2016/068325
(87) Internationale Veröffentlichungsnummer: WO 2017/036703

(56) Entgegenhaltungen:
- WO-A1-01/11101
- DE-A1-102008 039 244

## Beschreibung

Die Erfindung betrifft eine Vorrichtung zum Behandeln eines Metallbandes, nachdem dieses aus einem Beschichtungsbehälter mit flüssigem Beschichtungsmaterial, z. B. Zink, ausgetreten ist.

Derartige Vorrichtungen sind im Stand der Technik grundsätzlich bekannt, so z. B. aus WO 2012/172648 A1 und den deutschen Patentanmeldungen DE 10 2009 051 932 A1, DE 10 2007 045 202 A1 und DE 10 2008 039 244 A1. Konkret offenbaren diese Druckschriften einen Beschichtungsbehälter, welcher mit flüssigem Beschichtungsmaterial befüllt ist. Zum Beschichten wird das Metallband durch den Behälter mit dem Beschichtungsmaterial geleitet. Nach dem Verlassen des Beschichtungsbehälters durchläuft das Metallband eine oberhalb des Beschichtungsbehälters angeordnete Abblaseinrichtung bzw. Düse zum Abblasen von überschüssigen Teilen des noch flüssigen Beschichtungsmaterials, welches an der Oberfläche des Metallbandes anhaftet. Oberhalb der Abblaseinrichtung ist eine von der Abblaseinrichtung gestützte elektromagnetische Stabilisierungseinrichtung, auch Dynamic Electro Magnetic Coating Optimizer DEMCO genannt, angeordnet zum Stabilisieren des Bandes nach Verlassen des Beschichtungsbehälters und der Abblaseinrichtung. Die elektromagnetische Stabilisierungseinrichtung generiert elektromagnetische Kräfte, mit deren Hilfe das Metallband mittig in einer Mittenebene der gesamten Vorrichtung gehalten wird; ein Schwingen des Metallbandes während des Durchlaufens von insbesondere der Abblaseinrichtung wird auf diese Weise zumindest reduziert.

Bei diesen beschriebenen Konstruktionen besteht - außer bei der Konstruktion gemäß der DE 10 2008 039 244 A1 - in der Realität jedoch der Nachteil, dass die elektromagnetische Stabilisierungseinrichtung recht weit oberhalb der Abblaseinrichtung angeordnet ist. Dies ist insofern nachteilig, als dass die von der Stabilisierungseinrichtung ausgeübte stabilisierende Wirkung auf das Metallband nur eingeschränkt bei der Abblaseinrichtung ankommt. Außerdem sind die von der Stabilisierungseinrichtung zu erzeugenden Kräfte, die notwendig sind, um das Metallband im Bereich der entfernten Abblaseinrichtung zu stabilisieren, im Stand der Technik verhältnismäßig groß. Dementsprechend ist auch der Energieaufwand zum Betreiben der Stabilisierungseinrichtung verhältnismäßig hoch. Schließlich ist es von Nachteil, dass die Stabilisierungseinrichtung oberhalb des Düsenträgers bzw. der Traverse angeordnet ist, weil dadurch der Zugang zu dem Metallband im Bereich des Düsenträgers deutlich erschwert wird.

Der Erfindung liegt die Aufgabe zugrunde, eine bekannte Vorrichtung zum Behandeln eines Metallbandes dahingehend weiterzubilden, dass der Zugang zu dem Metallband im Bereich des Düsenträgers deutlich erleichtert wird.

Diese Aufgabe wird durch den Gegenstand des Patentanspruchs 1 gelöst.

Durch die beanspruchte nähere Anordnung der Stabilisierungseinrichtung an der Abblaseinrichtung wird vorteilhafterweise erreicht, dass von der Stabilisierungseinrichtung weniger Kraft generiert werden muss, um das Metallband im Bereich der Abblaseinrichtung bzw. Düse zu stabilisieren. Dadurch wird auch der Energiebedarf der Stabilisierungseinrichtung verringert und die Vorrichtung insgesamt effizienter.

Eine horizontale Traverse, auch Düsenträger genannt, ist zwischen zwei vertikalen Ständern montiert. An der Traverse ist die Abblaseinrichtung befestigt, unterhalb der Traverse hängend. Auch die Stabilisierungseinrichtung ist unterhalb der Traverse hängend an dieser befestigt, allerdings zwischen der Traverse und der Abblaseinrichtung. Die Halterung der Stabilisierungseinrichtung an der Traverse ist unabhängig von der Befestigung der Abblaseinrichtung an der Traverse.

Die Anordnung von sowohl der Stabilisierungseinrichtung wie auch von der Abblaseinrichtung unterhalb der Traverse, bietet den Vorteil, dass der Bereich oberhalb der Traverse, und damit auch ein von der Traverse aufgespannter Schlitz zur Durchführung des Metallbandes für eine Bedienperson sehr einfach zugänglich sind.

Gemäß einem ersten Ausführungsbeispiel erfolgt die jeweils individuelle Befestigung der Abblaseinrichtung und der Stabilisierungseinrichtung an die Traverse über unabhängige Verlagerungseinrichtungen. Konkret ist die Abblaseinrichtung über eine Abblas-Verlagerungseinrichtung an der Traverse befestigt, aber relativ zu der Traverse verlagerbar. Weiterhin ist die Stabilisierungseinrichtung über eine Stabilisierungs-Verlagerungseinrichtung an der Traverse befestigt, aber relativ zu der Traverse verlagerbar. Die beiden Verlagerungseinrichtungen ermöglichen jeweils verschiedene Freiheitsgrade für die Bewegung der Abblaseinrichtung und der Stabilisierungseinrichtung gegenüber der Mittenebene der Vorrichtung und auch gegenüber dem Metallband. Die beiden

Einrichtungen ermöglichen insbesondere eine Verlagerung der Abblaseinrichtung und der Stabilisierungseinrichtung relativ zueinander. Neben den durch die Abblas-Verlagerungseinrichtung und die Stabilisierungs-Verlagerungseinrichtung realisierten individuellen Freiheitsgraden für die jeweiligen Einrichtungen ist es vorteilhaft, dass die Traverse zusammen mit der daran angehängten Abblas- und Stabilisierungseinrichtung an den vertikalen Ständern vertikal verschiebbar gelagert ist. Die vertikalen Ständer sind zusammen mit der Traverse parallel zueinander in der horizontalen Ebene verlagerbar. Weil die Traverse an einem der vertikalen Ständer um einen festen Drehpunkt (Festseite) in horizontaler Ebene schwenkbar gelagert ist und die Traverse an dem anderen vertikalen Ständer lose gelagert ist (Losseite), ist auch ein Verschwenken der Traverse in der horizontalen Ebene möglich. Diese Freiheitsgrade der Traverse gelten für die Abblaseinrichtung und die Stabilisierungseinrichtung gleichermaßen, weil beide genannten Einrichtungen an der Traverse befestigt sind.

Der Beschreibung sind zwei Figuren beigefügt, wobei
- Figur 1: eine Breitenansicht der erfindungsgemäßen Vorrichtung,
- Figur 2: einen Querschnitt durch die erfindungsgemäße Vorrichtung, und
- Figuren 3 und 4: Draufsichten auf die Schlitze der erfindungsgemäßen Abblaseinrichtung oder der erfindungsgemäßen elektromagnetischen Stabilisierungseinrichtung, jeweils mit Markierung der Soll-Mittenlage und unterschiedlichen unerwünschten Ist-Lagen des Metallbandes
zeigt.

Die Erfindung wird nachfolgend in Form von Ausführungsbeispielen unter Bezugnahme auf die genannten Figuren detailliert beschrieben. In allen Figuren sind gleiche technische Elemente mit gleichen Bezugszeichen bezeichnet.

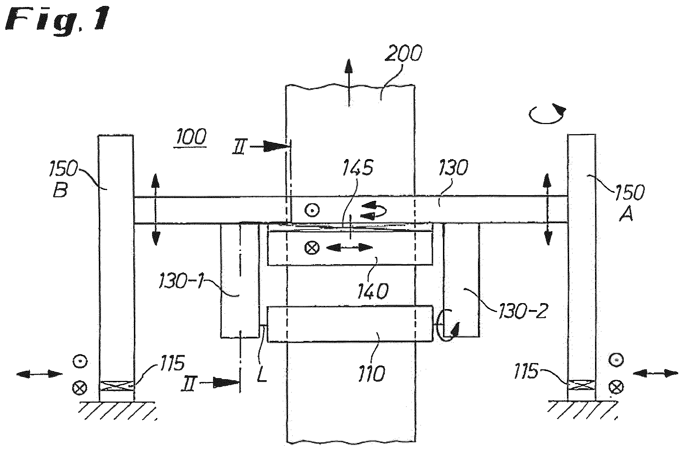

Figur 1 zeigt die erfindungsgemäße Vorrichtung 100. Sie umfasst zwei seitliche, sich vertikal erstreckende Ständer 150, an denen eine Traverse 130, auch Düsenträger genannt, vertikal und horizontal verfahrbar gelagert ist, siehe die Doppelpfeile in Figur 1. Die Vorrichtung 100 ist weiterhin in der horizontalen Ebene schwenkbar. Zu diesem Zweck ist einer der beiden Ständer 150 als Festseite A ausgebildet, auf welcher die Traverse um eine vertikale Drehachse schwenkbar gelagert ist. Der gegenüberliegende Ständer ist dagegen als Losseite B ausgebildet und stützt die Traverse lediglich vertikal ab. Durch diese Ausbildung der Ständer als Fest- und Losseite kann die Vorrichtung 100 und insbesondere die Traverse 140 bei schräg stehendem Metallband 200 durch Schwenken in der Horizontalen symmetrisch zu diesem ausgerichtet werden. Im Ergebnis sollen die Breitseiten der Traverse immer parallel zum Metallband ausgerichtet sein und beide einen gleichen Abstand zu diesem aufweisen.

An der Traverse 130 hängt eine Abblaseinrichtung 110 bzw. Düse. Die Ankopplung der Abblaseinrichtung 110 an die Traverse 130 erfolgt nicht starr, sondern über eine Abblas-Verlagerungseinrichtung 115, welche ausgebildet ist, die Abblaseinrichtung 110 relativ zu der Traverse 130 in der horizontalen Ebene, d. h. insbesondere senkrecht zu der Mittenebene 160 der Vorrichtung zu verlagern. Außerdem ist die Abblas-Verlagerungseinrichtung 115 ausgebildet, die Abblaseinrichtung 110 um ihre eigene Längsachse L zu schwenken und so geeignet gegen das Metallband 200 anzustellen.

Zwischen der Traverse 130 und der Abblaseinrichtung 110 ist eine Stabilisierungseinrichtung 140, auch Dynamic Electro Magnetic Coating Optimizer DEMCO genannt, über eine Stabilisierungs-Verlagerungseinrichtung 145 an der Traverse befestigt. Diese Stabilisierungs-Verlagerungseinrichtung 145 ermöglicht eine translatorische Verlagerung der Stabilisierungseinrichtung 140 in der horizontalen Ebene relativ zu der Traverse, insbesondere senkrecht und parallel zu der Mittenebene 160 der Vorrichtung 100. Zusätzlich kann die Stabilisierungs-Verlagerungseinrichtung 145 auch ausgebildet sein, die Stabilisierungseinrichtung 140 in der horizontalen Ebene relativ zu der Traverse 130 und relativ zu der Abblaseinrichtung 110 um eine senkrechte Drehachse zu verschwenken.

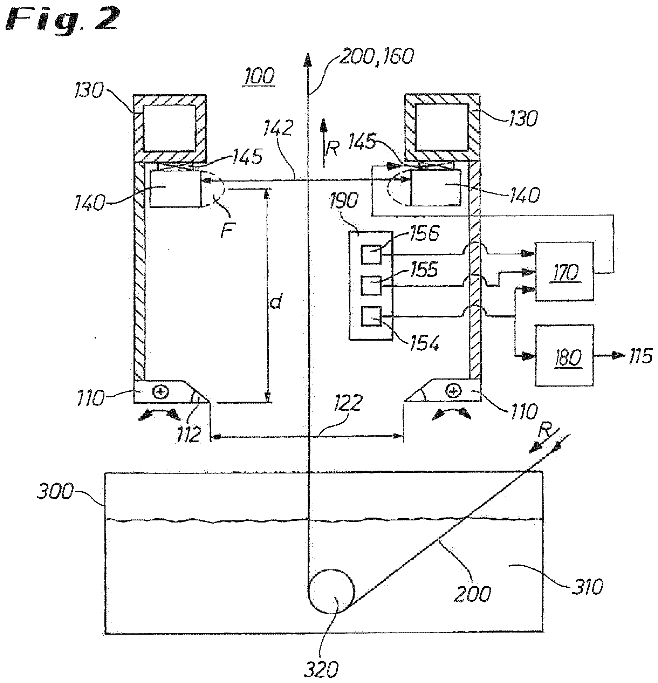

Figur 2 zeigt die erfindungsgemäße Vorrichtung aus Figur 1 in einer Querschnittsansicht. Das Bezugszeichen 170 bezeichnet eine Steuereinrichtung zur Ansteuerung der Stabilisierungs-Verlagerungseinrichtung 145. Es ist ein Beschichtungsbehälter 300 zu erkennen, welcher grundsätzlich unterhalb der Vorrichtung 100 angeordnet ist. Das zu beschichtende Metallband 200 wird in Transportrichtung R in den Beschichtungsbehälter 300 mit dem flüssigen Beschichtungsmaterial 310 geleitet und dort mit Hilfe einer Umlenkrolle 320 in die Vertikale umgelenkt. Es durchläuft dann von unten nach oben zunächst die Abblaseinrichtung 110 sowie nachfolgend die Stabilisierungseinrichtung 140. Die vorliegende Erfindung sieht vor, dass der Abstand d zwischen der Wirkungslinie der maximalen Kraft F der Stabilisierungseinrichtung auf das Metallband 200 und dem Luftaustrittsspalt 112 in einem Bereich von 200 bis 800 mm, vorzugsweise in einem Bereich von 300 bis 500 mm liegt.

Zur Realisierung der geänderten Positionierung bzw. Anordnung der Stabilisierungseinrichtung 140 sind selbstverständlich alle notwendigen elektrischen und pneumatischen Zuführleitungen bzw. Rohrverläufe geeignet anzupassen. Das gleiche gilt auch für diverse Gehäusebleche. Gegenüber der bekannten Vorrichtung 100 kann es erforderlich sein, die Haitevorrichtungen 130-1, 130-2, beispielsweise um 100 mm, weiter auseinanderzusetzen als im Stand der Technik, um die Stabilisierungseinrichtung 140 nicht nur in dem Zwischenraum zwischen den Haltevorrichtungen aufnehmen zu können, sondern um auch deren horizontale Verfahrbarkeit mit Hilfe der Stabilisierungs-Verlagerungseinrichtung 145 zu ermöglichen bzw. um dafür ausreichenden Platz zu schaffen.

Die Abblaseinrichtung 110 spannt einen Schlitz 122 auf, durch welchen das Metallband 200 geführt ist. Mit Hilfe der Abblaseinrichtung wird überschüssiges Beschichtungsmaterial von der Oberfläche des Metallbandes 200 abgeblasen.

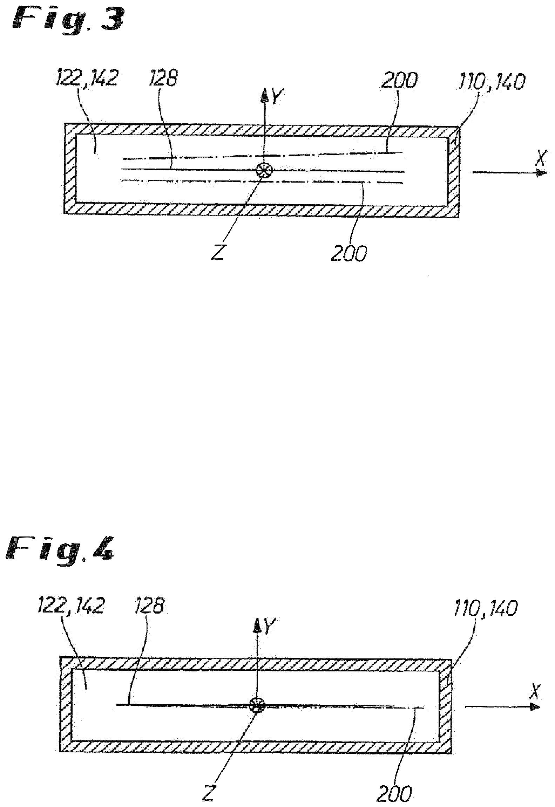

Damit das Abblasen auf der Ober- und Unterseite des Metallbandes 200 gleichmäßig erfolgt, ist es wichtig, dass das Metallband 200 den Schlitz 122 der Abblaseinrichtung 120 in einer vorgegebenen Soll-Mittenlage, auch Mittenebene 160 genannt, durchläuft, wie sie in Figur 3 in Form der durchgezogenen Linie in X-Richtung symbolisiert ist. Diese Soll-Mittenlage zeichnet sich insbesondere durch gleichmäßige Abstände bzw. Abstandsverteilungen zu den inneren Rändern des Schlitzes 122 der Abblaseinrichtung 120 aus. Neben der gewünschten vorgegebenen Soll-Mittenlage sind in Figur 3 auch mögliche unerwünschte Ist-Lagen des Metallbandes als gestrichelte Linien eingezeichnet. So bestehen unerwünschte Ist-Lagen für das Metallband 200 beispielsweise darin, dass es gegenüber der Soll-Mittenlage verdreht oder in Y-Richtung parallel verschoben ist.

Figur 4 zeigt eine dritte mögliche unerwünschte Ist-Lage, in welcher das Metallband 200 gegenüber der Soll-Mittenlage in X-Richtung, d. h. in Breitenrichtung parallel verschoben ist.

Die elektromagnetische Stabilisierungseinrichtung 140 weist ihrerseits einen Schlitz 142 auf, durch den das Metallband 200 ebenfalls geführt ist. Auch hier gilt, dass das Metallband 200 den Schlitz 142 vorzugsweise in einer vorgegebenen Soll-Mittenlage 160 durchläuft, wie in Figuren 3 und 4 gezeigt, damit die durch die elektromagnetische Stabilisierungseinrichtung 140 bereitgestellten Kräfte in gewünschter Weise gleichmäßig auf das Metallband 200 stabilisierend einwirken können. Für den Schlitz 142 und die auch dort angestrebte Soll-Mittenlage gilt dasselbe wie zuvor unter Bezugnahme auf die Figuren 3 und 4 für den Schlitz 122 der Abblaseinrichtung 120 Gesagte.

Zwischen der Stabilisierungseinrichtung 140 und der Abblaseinrichtung 110 ist weiterhin eine erste Erfassungseinrichtung 154 angeordnet zum Erfassen einer Abweichung der Ist-Lage des Metallbandes 200 von einer vorgegebenen Soll-Mittenlage in dem Schlitz 122 der Abblaseinrichtung 110. Alternativ kann die erste Erfassungseinrichtung 154 auch nur zur Erfassung der Ist-Lage des Metallbandes ausgebildet sein. Es ist weiterhin eine Regelungseinrichtung 180 vorgesehen zum Regeln der Ist-Lage des Metallbandes 200 auf die vorgegebene Soll-Mittenlage 128 in dem Schlitz 122 der Abblaseinrichtung, wie oben unter Bezugnahme auf die Figuren 3 und 4 erläutert, durch Verlagerung der Abblaseinrichtung 110 mit Hilfe einer Abblas-Verlagerungseinrichtung 115, d. h. durch Verlagern der Traverse 130, an der die Abblaseinrichtung 110 hängt. Die Regelung erfolgt im Ansprechen auf die erfasste Abweichung. Wenn die Ermittlung der Abweichung der Ist-Lage von der Soll-Mittenlage nicht in der ersten Erfassungseinrichtung 154 erfolgt, kann sie zum Beispiel auch innerhalb der Regelungseinrichtung 180 erfolgen. Die Verlagerung der Abblaseinrichtung 110 erfolgt in horizontaler Ebene quer zur Transportrichtung R des Metallbandes nach Maßgabe der erfassten Abweichung der Ist-Lage des Metallbandes von der vorgegebenen Soll-Mittenlage in dem Schlitz 122 der Abblaseinrichtung. Anders ausgedrückt: Wird festgestellt, dass das Metallband 200 den Schlitz 122 nicht in der Soll-Mittenlage 128 durchläuft, so wird die Abblaseinrichtung 110 mit Hilfe der Abblas-Verlagerungseinrichtung 115 derart verlagert, dass das Metallband den Schlitz 122 der Abblaseinrichtung wieder in der vorgegebenen Soll-Mittenlage 128 durchläuft. Die erste Erfassungseinrichtung 154 ist zu diesem Zweck so ausgebildet, dass sie vorzugsweise alle drei oben unter Bezugnahme auf die Figuren 3 und 4 beschriebenen von der Soll-Mittenlage 128 abweichenden Ist-Lagen des Metallbandes 200 erfassen kann.

Die besagte Verlagerung der Abblaseinrichtung 110 soll sich nicht auf die elektromagnetische Stabilisierungseinrichtung 140 auswirken. Zu diesem Zweck ist die Steuereinrichtung 170 ausgebildet, die Stabilisierungs-Verlagerungseinrichtung 145 derart anzusteuern, dass die elektromagnetische Stabilisierungseinrichtung 140 im Falle einer Verlagerung der Abblaseinrichtung 110 gegenüber einer Passlinien-Referenzposition nicht mit verfahren wird, sondern an ihrem ursprünglichen Ort verbleiben kann. Die Passlinien-Referenzposition 160 bezeichnet eine festdefinierte Mittenebene der Vorrichtung. Demgegenüber beziehen sich die Soll-Mittenlagen 128 auf die Schlitze 122, 142. Die Steuereinrichtung 170 wirkt demnach derart auf die Stabilisierungs-Verlagerungseinrichtung 145 ein, dass im Falle einer Verlagerung der Abblaseinrichtung 110 die elektrische Stabilisierungseinrichtung 140 vorzugsweise die genau gegenteilige Bewegung wie die Abblaseinrichtung 110 macht, das heißt, im Ergebnis vorzugsweise an ihrem ursprünglichen Ort verbleibt.

Um diese spezielle Art der Ansteuerung für die Stabilisierungs-Verlagerungseinrichtung 145 zu realisieren, kann die Steuerungseinrichtung 170 verschiedene Situationen auswerten. Zum einen kann die Steuerungseinrichtung 170 ausgebildet sein, die Verlagerung der elektromagnetischen Stabilisierungseinrichtung 140 nach Maßgabe der von der ersten Erfassungseinrichtung 154 erfassten Abweichung der Ist-Lage des Metallbandes von der vorgegebenen Soll-Mittenlage des Metallbandes in dem Schlitz 122 der Abblaseinrichtung 110 durchzuführen.

Alternativ oder zusätzlich kann die Steuereinrichtung 170 ausgebildet sein, das Verlagern der elektromagnetischen Stabilisierungseinrichtung nach Maßgabe und in entgegengesetzter Richtung zu der von einer zweiten Erfassungseinrichtung 155 erfassten Verlagerung der Abblaseinrichtung 120 durchzuführen. Die zweite Erfassungseinrichtung 155 dient zum Erfassen der Verlagerung der Abblaseinrichtung 110 gegenüber einer Passlinien-Referenzposition 160 der Vorrichtung 100.

Schließlich kann gemäß einer weiteren Alternative oder ergänzend die Steuereinrichtung 170 ausgebildet sein, das Verlagern der elektromagnetischen Stabilisierungseinrichtung 140 nach Maßgabe einer erfassten Abweichung der Ist-Lage des Metallbandes von einer vorgegebenen Soll-Mittenlage in dem Schlitz 142 der elektromagnetischen Stabilisierungseinrichtung zu veranlassen. Voraussetzung dafür ist, dass eine dritte Erfassungseinrichtung 156 vorhanden ist zum Erfassen der besagten Abweichung der Ist-Lage des Metallbandes von der vorgegebenen Soll-Mittenlage in dem Schlitz 142 der elektromagnetischen Stabilisierungseinrichtung 140.

Die erste, zweite und dritte Erfassungseinrichtung 154, 155, 156 sind jeweils ausgebildet, vorzugsweise alle denkbaren Abweichungen einer Ist-Lage des Metallbandes von der gewünschten Soll-Mittenlage zu erkennen. Dazu zählen insbesondere eine (Parallel-)Verschiebung des Metallbandes in x- oder y-Richtung oder eine Verdrehung, wie oben unter Bezugnahme auf die Figuren 3 und 4 erläutert. Entsprechend sind die Stabilisierungs- und Abblas-Verlagerungseinrichtung 145, 115 - bei geeigneter Ansteuerung durch die Regelungseinrichtung 180 oder die Steuerungseinrichtung 170 - ausgebildet, die Abblaseinrichtung 110 und die elektromagnetische Stabilisierungseinrichtung 140 in der horizontalen Ebene quer zur Transportrichtung R des Metallbandes in beliebiger Weise zu verfahren, insbesondere (parallel) zu verschieben oder um eine vertikale Drehachse zu verdrehen, um das Durchlaufen des Metallbandes in der Soll-Mittenlage zu realisieren.

Die erste und dritte Erfassungseinrichtung 154, 156 sowie optional zusätzlich auch die zweite Erfassungseinrichtung 155 können in Form einer oder mehrerer optischen Sensoreinrichtungen 190 realisiert sein. Insofern bildet die Sensoreinrichtung eine bauliche Einheit für die genannten Erfassungseinrichtungen. Vorzugsweise ist eine Sensoreinrichtung 190 je Spule in der elektromagnetischen Stabilisierungseinrichtung 140 vorgesehen. Die Messwerte aller Sensoreinrichtungen werden typischerweise gemittelt. Die Sensoreinrichtung 190 kann auch allgemein als Abstandserfassungseinrichtung bezeichnet werden.

### Bezugszeichenliste

- 100: Vorrichtung
- 110: Abblaseinrichtung
- 112: Luftaustrittsspalt
- 115: Abblas-Verlagerungseinrichtung
- 122: Schlitz der Abblaseinrichtung
- 128: Soll-Mittenebene
- 130: Traverse
- 130-1: Haltevorrichtung
- 130-2: Haltevorrichtung
- 140: Stabilisierungseinrichtung
- 142: Schlitz der Stabilisierungseinrichtung
- 145: Stabilisierungs-Verlagerungseinrichtung
- 150: seitlicher Ständer
- 154: erste Erfassungseinrichtung
- 155: zweite Erfassungseinrichtung
- 156: dritte Erfassungseinrichtung
- 160: Passlinien-Referenzposition der Vorrichtung
- 170: Steuereinrichtung
- 180: Regelungseinrichtung
- 190: Sensoreinrichtung
- 200: Metallband
- 310: Beschichtungsmaterial

- A: Festseite
- B: Losseite
- d: Abstand
- F: Kraft
- L: Längsachse Abblaseinrichtung
- R: Transportrichtung des Metallbandes
- X: Breiteneinrichtung des Metallbandes in Soll-Mittenlage
- Y: Richtung quer zu der von dem Metallband aufgespannten Ebene

## Patentansprüche

1. Vorrichtung (100) zum Behandeln eines Metallbandes (200) nachdem dieses aus einem Beschichtungsbehälter (300) mit flüssigem Beschichtungsmaterial (310) ausgetreten ist, wobei die Vorrichtung aufweist:
eine oberhalb des Beschichtungsbehälters angeordnete Abblaseinrichtung (110) mit einem Luftaustrittsspalt (112) zum Abblasen von überschüssigen Teilen des noch flüssigen Beschichtungsmaterials (310) von der Oberfläche des Metallbandes (200) nach dem Durchleiten des Metallbandes durch den Beschichtungsbehälter; und
eine oberhalb der Abblaseinrichtung (110) angeordnete elektromagnetische Stabilisierungseinrichtung (140) zur Stabilisierung des Metallbandes (200) nach dem Verlassen des Beschichtungsbehälters und der Abblaseinrichtung; wobei die Stabilisierungseinrichtung (140) derart oberhalb der Abblaseinrichtung (110) angeordnet ist, dass der Abstand (d) zwischen der Wirkungslinie der maximalen Kraft (F) der Stabilisierungseinrichtung auf das Metallband (200) und dem Luftaustrittsspalt (112) in einem Bereich von 100-1200 mm liegt; und
eine horizontale Traverse (130), welche zwischen zwei vertikalen seitlichen Ständern (150) montiert ist, wobei die Abblaseinrichtung (110) unterhalb der Traverse (130) hängend an dieser befestigt ist;
**dadurch gekennzeichnet, dass**
die Stabilisierungseinrichtung (140) zwischen der Traverse (130) und der Abblaseinrichtung - unabhängig von der Abblaseinrichtung - an der Traverse (130) hängend an dieser befestigt ist.

2. Vorrichtung nach Anspruch 1,
**dadurch gekennzeichnet, dass**
die Abblaseinrichtung (110) über eine Abblas-Verlagerungseinrichtung (115) an der Traverse (130) befestigt ist; wobei die Abblas-Verlagerungseinrichtung (115) ausgebildet ist, die Abblaseinrichtung (110) relativ zu der Traverse (130) in einer horizontalen Ebene zu verlagern und/oder um ihre eigene Längsachse zu verschwenken; und
dass eine Regelungseinrichtung (180) vorgesehen ist zum Ansteuern der Abblas-Verlagerungseinrichtung (115).

3. Vorrichtung (100) nach Anspruch 1 oder 2,
**dadurch gekennzeichnet, dass**
die Stabilisierungseinrichtung (140) über eine Stabilisierungs-Verlagerungseinrichtung (145) an der Traverse (130) befestigt ist, wobei die Stabilisierungs-Verlagerungseinrichtung (145) ausgebildet ist, die Stabilisierungseinrichtung (140) relativ zu der Traverse (130) und relativ zu der Abblaseinrichtung (110) in der horizontalen Ebene translatorisch zu verlagern und/oder zu verschwenken; und
dass eine Steuereinrichtung (170) vorgesehen ist, zum Ansteuern der Stabilisierungs-Verlagerungseinrichtung (145).

4. Vorrichtung (100) nach einem der Ansprüche 1 bis 3,
**dadurch gekennzeichnet, dass**
die Traverse (130) - und zusammen mit der Traverse auch die daran befestigte Abblaseinrichtung (110) und Stabilisierungseinrichtung (140) - an den vertikalen Ständern (140) vertikal verschiebbar gelagert ist/sind.

5. Vorrichtung (100) nach einem der Ansprüche 2 bis 4,
**dadurch gekennzeichnet, dass**
eine erste Erfassungseinrichtung (154) vorgesehen ist zum Erfassen einer Abweichung der Ist-Lage des Metallbandes (200) von einer vorgegebenen Soll-Mittenlage (128) in dem Schlitz (122) der Abblaseinrichtung (110); und die Regelungseinrichtung (180) ausgebildet ist zum Regeln der Ist-Lage des Metallbandes (200) auf die vorgegebene Soll-Mittenlage des Metallbandes (200) in dem Schlitz (122) der Abblaseinrichtung (110) durch Verlagerung der Abblaseinrichtung (120) mit Hilfe der Abblas-Verlagerungseinrichtung (115) in der horizontalen Ebene nach Maßgabe der erfassten Abweichung der Ist-Lage des Metallbandes (200) von der vorgegebenen Soll-Mittenlage in dem Schlitz (122) der Abblaseinrichtung (110).

6. Vorrichtung (100) nach Anspruch 5,
**dadurch gekennzeichnet,**
**dass** die Steuereinrichtung (170) ausgebildet ist zum Verlagern der elektromagnetischen Stabilisierungseinrichtung (140) nach Maßgabe der von der ersten Erfassungseinrichtung (154) erfassten Abweichung der Ist-Lage des Metallbandes von der vorgegebenen Soll-Mittenlage des Metallbandes (200) in dem Schlitz (122) der Abblaseinrichtung (110).

7. Vorrichtung (100) nach Anspruch 3,
**dadurch gekennzeichnet,**
**dass** eine zweite Erfassungseinrichtung (155) vorgesehen ist zum Erfassen der Verlagerung der Abblaseinrichtung (110) gegenüber einer Passlinien-Referenzposition (160) der Vorrichtung (100); und
**dass** die Steuereinrichtung (170) ausgebildet ist, die Stabilisierungs-Verlagerungseinrichtung (145) anzusteuern zum Verlagern der elektromagnetischen Stabilisierungseinrichtung (140) nach Maßgabe und in entgegengesetzter Richtung zu der von der zweiten Erfassungseinrichtung (155) erfassten Verlagerung der Abblaseinrichtung (110).

8. Vorrichtung (100) nach Anspruch 3,
**dadurch gekennzeichnet,**
**dass** eine dritte Erfassungseinrichtung (145) vorgesehen ist zum Erfassen einer Abweichung der Ist-Lage des Metallbandes (200) von einer vorgegebenen Soll-Mittenlage in einem Schlitz (142) der elektromagnetischen Stabilisierungseinrichtung (140); und
**dass** die Steuereinrichtung (170) ausgebildet ist, die Stabilisierungs-Verlagerungseinrichtung (145) anzusteuern zum Verlagern der elektromagnetischen Stabilisierungseinrichtung (140) nach Maßgabe einer erfassten Abweichung der Ist-Lage des Metallbandes von der vorgegebenen Soll-Mittenlage in dem Schlitz (142) der elektromagnetischen Stabilisierungseinrichtung (140).

9. Vorrichtung (100) nach Anspruch 3,
**dadurch gekennzeichnet,**
**dass** die Stabilisierungs-Verlagerungseinrichtung (145) zum Verlagern der elektromagnetischen Stabilisierungseinrichtung (140) zwischen der Traverse (130) und der elektromagnetischen Stabilisierungseinrichtung (140) angeordnet ist.

## Claims

1. A device (100) for treating a metal strip (200) after it has exited a coating container (300) with liquid coating material (310), wherein the device comprises:
a blow-off apparatus (110) that is arranged above the coating container and has an air outlet gap (112) for blowing off excess quantities of the still liquid coating material (310) from the surface of the metal strip (200) after the transport of the metal strip through the coating container;
an electromagnetic stabilization apparatus (140) that is arranged above the blow-off apparatus (110) and serves for stabilizing the metal strip (200) after it exits the coating container and the blow-off apparatus, wherein the stabilization apparatus (140) is arranged above the blow-off apparatus (110) in such a way that the distance (d) between the line of action of the maximum force (F) of the stabilization apparatus upon the metal strip (200) and the air outlet gap (112) lies in a range of 100-1200 mm; and
a horizontal crosshead (130) that is mounted between two vertical lateral stands (150), wherein the blow-off apparatus (110) is fastened on the crosshead (130) underneath thereof in a suspended manner;
**characterized in that**
the stabilization apparatus (140) is fastened on the crosshead (130) - independently of the blow-off apparatus - in a suspended manner between the crosshead (130) and the blow-off apparatus.

2. The device according to claim 1,
**characterized in that**
the blow-off apparatus (110) is fastened on the crosshead (130) by means of a blow-off displacement apparatus (115), wherein the blow-off displacement apparatus (115) is designed for displacing the blow-off apparatus (110) relative to the crosshead (130) in a horizontal plane and/or for pivoting the blow-off apparatus about its longitudinal axis; and **in**
**that** a regulating device (180) is provided for activating the blow-off displacement apparatus (115).

3. The device (100) according to claim 1 or 2,
**characterized in that**
the stabilization apparatus (140) is fastened on the crosshead (130) by means of a stabilization displacement apparatus (145), wherein the stabilization displacement apparatus (145) is designed for displacing the stabilization apparatus (140) relative to the crosshead (130) and relative to the blow-off apparatus (110) in the horizontal plane and/or for pivoting the stabilization apparatus; and **in**
**that** a control device (170) is provided for activating the stabilization displacement apparatus (145).

4. The device (100) according to one of claims 1 to 3,
**characterized in that**
the crosshead (130) - as well as the blow-off apparatus (110) and the stabilization apparatus (140) fastened on the crosshead - is/are supported on the vertical stands (140) in a vertically displaceable manner.

5. The device (100) according to one of claims 2 to 4,
**characterized in that**
a first detection apparatus (154) is provided for detecting a deviation of the actual position of the metal strip (200) from a predefined nominal center position (128) in the slot (122) of the blow-off apparatus (110); and **in that** the regulating device (180) is designed for adjusting the actual position of the metal strip (200) to the predefined nominal center position of the metal strip (200) in the slot (122) of the blow-off apparatus (110) by displacing the blow-off apparatus in the horizontal plane (120) with the aid of the blow-off displacement apparatus (115) based on the detected deviation of the actual position of the metal strip (200) from the predefined nominal center position in the slot (122) of the blow-off apparatus (110).

6. The device (100) according to claim 5,
**characterized in**
**that** the control device (170) is designed for displacing the electromagnetic stabilization apparatus (140) based on the deviation of the actual position of the metal strip from the predefined nominal center position of the metal strip (200) in the slot (122) of the blow-off apparatus (110), which is detected by the first detection apparatus (154).

7. The device (100) according to claim 3,
**characterized in**
**that** a second detection apparatus (155) is provided for detecting the displacement of the blow-off apparatus (110) relative to a registration line reference position (160) of the device (100); and in
**that** the control device (170) is designed for activating the stabilization displacement apparatus (145) in order to displace the electromagnetic stabilization apparatus (140) based on and in the opposite direction of the displacement of the blow-off apparatus (110), which is detected by the second detection apparatus (155).

8. The device (100) according to claim 3,
**characterized in**
**that** a third detection apparatus (145) is provided for detecting a deviation of the actual position of the metal strip (200) from a predefined nominal center position in a slot (142) of the electromagnetic stabilization apparatus (140); and in
**that** the control device (170) is designed for activating the stabilization displacement apparatus (145) in order to displace the electromagnetic stabilization apparatus (140) based on the detected deviation of the actual position of the metal strip from the predefined nominal center position in the slot (142) of the electromagnetic stabilization apparatus (140).

9. The device (100) according to claim 3,
**characterized in**
**that** the stabilization displacement apparatus (145) for displacing the electromagnetic stabilization apparatus (140) is arranged between the crosshead (130) and the electromagnetic stabilization apparatus (140).

## Revendications

1. Dispositif (100), destiné à usiner un feuillard métallique (200) une fois qu'il est sorti d'une cuve de revêtement (300) contenant de la matière de revêtement liquide (310), le dispositif comportant :
un dispositif de soufflage (110) placé au-dessus de la cuve de revêtement, pourvu d'une fente de sortie d'air (112), pour le soufflage de parties excédentaires de la matière de revêtement encore liquide (310) de la surface du feuillard métallique (200), après le passage du feuillard métallique à travers la cuve de revêtement ; et
un dispositif de stabilisation électromagnétique (140) placé au-dessus du dispositif de soufflage (110), pour la stabilisation du feuillard métallique (200) après sa sortie de la cuve de revêtement et du dispositif de soufflage ; le dispositif de stabilisation (140) étant placé au-dessus du dispositif de soufflage (110), de telle sorte que l'écart (d) entre la ligne d'action de la force maximale (F) exercée par le dispositif de stabilisation sur le feuillard métallique (200) et la fente de sortie d'air (112) se situe dans un ordre de 100 à 1200 mm ; et
une traverse (130) horizontale, laquelle est montée entre deux supports (150) latéraux verticaux, le dispositif de soufflage (110) étant fixé sur la traverse (130), en accrochage sur celle-ci ;
**caractérisé en ce que**
le dispositif de stabilisation (140) est fixé sur la traverse (130), en accrochage sur celle-ci, entre la traverse (130) et le dispositif de soufflage (indépendamment du dispositif de soufflage).

2. Dispositif selon la revendication 1,
**caractérisé en ce que**
le dispositif de soufflage (110) est fixé sur la traverse (130) par l'intermédiaire d'un dispositif de déplacement du soufflage (115) ; le dispositif de déplacement du soufflage (115) étant conçu pour déplacer le dispositif de soufflage (110) par rapport à la traverse (130) dans un plan horizontal et/ou pour le faire pivoter autour de son propre axe longitudinal ; et
**en ce qu'**il est prévu un dispositif de réglage (180), pour l'activation du dispositif de déplacement du soufflage (115).

3. Dispositif (100) selon la revendication 1 ou 2,
**caractérisé en ce que**
le dispositif de stabilisation (140) est fixé sur la traverse (130) par l'intermédiaire d'un dispositif de déplacement de la stabilisation (145), le dispositif de déplacement de la stabilisation (145) étant conçu pour déplacer en translation dans le plan horizontal et/ou pour faire pivoter le dispositif de stabilisation (140) par rapport à la traverse (130) et par rapport au dispositif de soufflage (110) ; et
**en ce qu'**il est prévu un système de commande (170), destiné à activer le système de déplacement de la stabilisation (145).

4. Dispositif (100) selon l'une quelconque des revendications 1 à 3,
**caractérisé en ce que**
la traverse (130) (et conjointement à la traverse, également le dispositif de soufflage (110) et le dispositif de stabilisation (140) qui y sont fixés) est/sont logé(s) en étant déplaçable(s) en direction verticale sur les supports (140) verticaux.

5. Dispositif (100) selon l'une quelconque des revendications 2 à 4,
**caractérisé en ce qu'**il
est prévu un premier dispositif de détection (154), pour détecter un écart de la position réelle du feuillard métallique (200) par rapport à une position centrale de consigne (128) prédéfinie dans la fente (122) du dispositif de soufflage (110) ; et le dispositif de réglage (180) est conçu pour régler la position réelle du feuillard métallique (200) à la position centrale de consigne prédéfinie du feuillard métallique (200) dans la fente (122) du dispositif de soufflage (110), par déplacement du dispositif de soufflage (120) à l'aide du dispositif de déplacement du soufflage (115) dans le plan horizontal, selon le critère de l'écart détecté entre la position réelle du feuillard métallique (200) et la position centrale de consigne prédéfinie dans la fente (122) du dispositif de soufflage (110).

6. Dispositif (100) selon la revendication 5,
**caractérisé en ce que**
le dispositif de commande (170) est conçu pour déplacer le dispositif de stabilisation électromagnétique (140) selon le critère de l'écart détecté par le premier dispositif de détection (154) entre la position réelle du feuillard métallique (200) et la position centrale de consigne prédéfinie dans la fente (122) du dispositif de soufflage (110).

7. Dispositif (100) selon la revendication 3,
**caractérisé en ce qu'**il
est prévu un deuxième dispositif de détection (155) pour détecter le déplacement du dispositif de soufflage (110) par rapport à une position de référence d'une ligne d'alignement (160) du dispositif (100) ; et
**en ce que** le dispositif de commande (170) est conçu pour activer le dispositif de déplacement de la stabilisation (145), pour le déplacement du dispositif de stabilisation électromagnétique (140) selon le critère et dans la direction opposée à celle du déplacement du dispositif de soufflage (110) détecté par le deuxième dispositif de détection (155).

8. Dispositif (100) selon la revendication 3,
**caractérisé en ce que**
le troisième dispositif de détection (145) est prévu pour détecter un écart de la position réelle du feuillard métallique (200) par rapport à une position centrale de consigne dans une fente (142) du dispositif de stabilisation électromagnétique (140) ; et
**en ce que** le dispositif de commande (170) est conçu pour activer le dispositif de déplacement de la stabilisation (145) pour déplacer le dispositif de stabilisation électromagnétique (140) selon le critère d'un écart détecté entre la position réelle du feuillard métallique et la position centrale de consigne dans la fente (142) du dispositif de stabilisation électromagnétique (140).

9. Dispositif (100) selon la revendication 3,
**caractérisé en ce que**
pour déplacer le dispositif de stabilisation électromagnétique (140), le dispositif de déplacement de la stabilisation (145) est placé entre la traverse (130) et le dispositif de stabilisation électromagnétique (140).
